(19) Europäisches Patentamt
European Patent Office
Office européen des brevets

(11) Publication number: 0 439 264 A2

# (12) EUROPEAN PATENT APPLICATION

(21) Application number: **91300221.8**

(22) Date of filing: **11.01.91**

(51) Int. Cl.5: **C08G 18/10**, C08G 18/44, C08G 18/50, C08G 18/65, C08G 18/76

(30) Priority: **26.01.90 US 471255**

(43) Date of publication of application: **31.07.91 Bulletin 91/31**

(84) Designated Contracting States: **DE FR GB**

(71) Applicant: **TEXACO CHEMICAL COMPANY**
**3040 Post Oak Boulevard**
**Houston, Texas 77056(US)**

(72) Inventor: **Grisby, Robert Allison, Jr.**
**216 Deep Wood**
**Georgetown, Texas 78628(US)**
Inventor: **Crawford, Wheeler Conrad**
**17903 Canyon Creek**
**Houston, Texas 77090(US)**
Inventor: **Cuscurida, Michael**
**3543 Greystone, Suite 1056**
**Austin, Texas 78731(US)**

(74) Representative: **Brock, Peter William et al**
**URQUHART-DYKES & LORD 91 Wimpole Street**
**London W1M 8AH(GB)**

## (54) Reaction injection moulded polyurea elastomers.

(57) Reaction injection moulded polyurea elastomers are obtained by reacting, in a closed mould, a polyisocyanate, an amine-terminated polyether having an average molecular weight of more than 1500, and having more than 50% of its active hydrogens in the form of amine hydrogens, and an amine-terminated chain extender. The polyisocyanate is an isocyanate-terminated quasi-prepolymer which is the reaction product of an excess of an aromatic polyisocyanate with a polycarbonate polyol and a polyether polyol.

EP 0 439 264 A2

# REACTION INJECTION MOULDED POLYUREA ELASTOMERS.

This invention concerns the field of reaction injection moulded polyurea elastomers.

US-A-4396729, -4444910 and -4333067 concern elastomers prepared using a high molecular weight amine-terminated polyether, an aromatic diamine chain extender and an aromatic polyisocyanate which may merely be a polyisocyanate or an isocyanate-terminated quasi-prepolymer prepared by reacting a polyol with an excess of polyisocyanate.

US-A-4822841 describes the use of a polycarbonate diol, polyoxyalkylene glycol, and a diisocyanate all in a solvent. This mixture, which does contain excess diisocyanate, is then reacted with a polyoxyalkylene diamine. Again, an excess of isocyanate is present. A monohydric ethylenic compound, such as 2-hydroxyethyl acrylate, is completely reacted with the excess isocyanate. The resulting intermediate product is then polymerized or cured by irradiation.

US-A-4456745 describes the syntheses and use of an isocyanate-terminated quasi-prepolymer prepared from a polycarbonate and an aromatic isocyanate. The possible additional use of a polyol is also mentioned. The quasi-prepolymer is suggested for use in the production of polyurethanes by a RIM process using a polyol and an aromatic amine chain extender.

US-A-4507444 describes the use of polycarbonates in the formation of isocyanate-terminated quasi-prepolymers. The quasi-prepolymers are converted into transparent products by reaction with diamines dissolved in vinyl monomers, which are subsequently subjected to radical polymerization.

This invention relates to a method for making a reaction injection moulded polyurea elastomer by reacting, in a closed mould, a polyisocyanate, an amine-terminated polyether having an average molecular weight of more than 1500, and having more than 50% of its active hydrogens in the form of amine hydrogens, and an amine-terminated chain extender. According to the invention, the polyisocyanate is an isocyanate-terminated quasi-prepolymer which is the reaction product of an excess of an aromatic polyisocyanate with a polycarbonate polyol and a polyether polyol.

The RIM elastomer produced according to this invention may be prepared from as few as three ingredients described below. A high molecular weight amine-terminated polyether, an amine-terminated chain extender, and an aromatic polyisocyanate which is the reaction product of an excess of an aromatic polyisocyanate with polycarbonate polyols and polyether polyols.

The amine-terminated polyethers useful in this invention include primary and secondary amine-terminated polyether polyols having an average molecular weight of more than 1,500, and generally having a functionality of 2 to 6, preferably from 2 to 3, and an amine equivalent weight from 750 to 4,000. Mixtures of amine-terminated polyethers may be used. In a preferred embodiment, the amine-terminated polyethers have an average molecular weight of at least, 2,500.

The amine-terminated polyether resins useful in this invention are polyether resins made from an appropriate initiator, to which lower alkylene oxides such as ethylene oxide, propylene oxide, butylene oxide or mixtures thereof are added, with the resulting hydroxyl-terminated polyol then being aminated. When two or more oxides are used, they may be present as random mixtures, or as blocks of one or the other polyether. In the amination step, it is highly desirable that the terminal hydroxyl groups in the polyol be substantially all secondary hydroxyl groups, for ease of amination. Normally, the amination step does not completely replace all of the hydroxyl groups, but the majority of the hydroxyl groups are replaced by amine groups. Therefore, the amine terminated polyether resins useful in this invention have more than 50 percent of their active hydrogens in the form of amine hydrogens. If ethylene oxide is used, it is desirable to cap the hydroxyl-terminated polyol with a small amount of higher alkylene oxide, to ensure that the terminal hydroxyl groups are substantially all secondary hydroxyl groups. The polyols so prepared are then reductively aminated, for instance as outlined in US-A-3654370.

In the practice of this invention, a single high molecular weight amine-terminated polyether resin may be used. Alternatively, mixtures of high molecular weight amine-terminated polyols, such as mixtures of di- and trifunctional materials and/or materials of different molecular weight or different chemical composition, may be used.

The amine-terminated diamine chain extenders useful in this invention include, for example, 1-methyl-3,5-diethyl-2, 4-diaminobenzene, 1-methyl-3,5 diethyl-2,6-diaminobenzene (both of these materials are also called diethyltoluene diamine or DETDA), 1,3,5-triethyl-2,6 diaminobenzene and 3,5,3',5'-tetraethyl-4,4'-diaminodiphenylmethane. Particularly preferred aromatic diamine chain extenders are 1-methyl-3,5-diethyl-2,4- diaminobenzene or a mixture of this compound with 1-methyl-3,5-diethyl-2,6-diaminobenzene. It is within the scope of this invention to include some aliphatic chain extender materials as described in US-A-4246363 and -4269945.

A wide variety of aromatic polyisocyanates may be used in accordance with the invention to form the isocyanate-terminated prepolymer. Typical aromatic polyisocyanates include polymethylene polyphenylisocyanates, naphthalene-1,4-diisocyanate, bis(4-isocyanatophenyl)methane, bis(3-methyl-4-isocyanatophenyl)methane, and 4,4'-diphenylpropane diisocyanate.

Other aromatic polyisocyanates used in the practice of the invention are methylene-bridged polyphenyl polyisocyanate mixtures, which have a functionality of from 2 to 4. These latter isocyanate compounds are generally produced by the phosgenation of corresponding methylene-bridged polyphenyl polyamines, which are conventionally produced by the reaction of formaldehyde and primary aromatic amines, such as aniline, in the presence of hydrochloric acid and/or other acidic catalysts. Known processes for preparing polyamines and corresponding methylene-bridged polyphenyl polyisocyanates therefrom are described in the literature and in many patents, for example, US-A-2683730, -2950263, -3012008, -3344162 and -3362979.

Usually methylene-bridged polyphenyl polyisocyanate mixtures contain 20 to 100 weight percent of methylene diphenyldiisocyanate isomers, with the remainder being polymethylene polyphenyl diisocyanates having higher functionalities and higher molecular weights. Typical of these are polyphenyl polyisocyanate mixtures containing 20 to 100 weight percent of methylene diphenyldiisocyanate isomers, of which 20 to 95 weight percent thereof is the 4,4'-isomer, with the remainder being polymethylene polyphenyl polyisocyanates of higher molecular weight and an average functionality of from 2.1 to 3.5. These isocyanate mixtures are known, commercially available materials and can be prepared by the process described in US-A-3362979.

By far the most preferred polyaromatic polyisocyanate is methylene bis(4-phenylisocyanate) or MDI, which can be used on the form of pure MDI, quasi-prepolymers of MDI, modified pure MDI, etc. Since pure MDI is a solid and, thus, often inconvenient to use, liquid products based on MDI are often used and are included in the scope of the terms MDI or methylene bis(4-phenylisocyanate) used herein. US-A-3394164 is an example of a disclosure of a liquid MDI product. More generally, uretonimine-modified pure MDI is included also. This product is made by heating pure distilled MDI in the presence of a catalyst. The liquid product is a mixture of pure MDI and modified MDI:

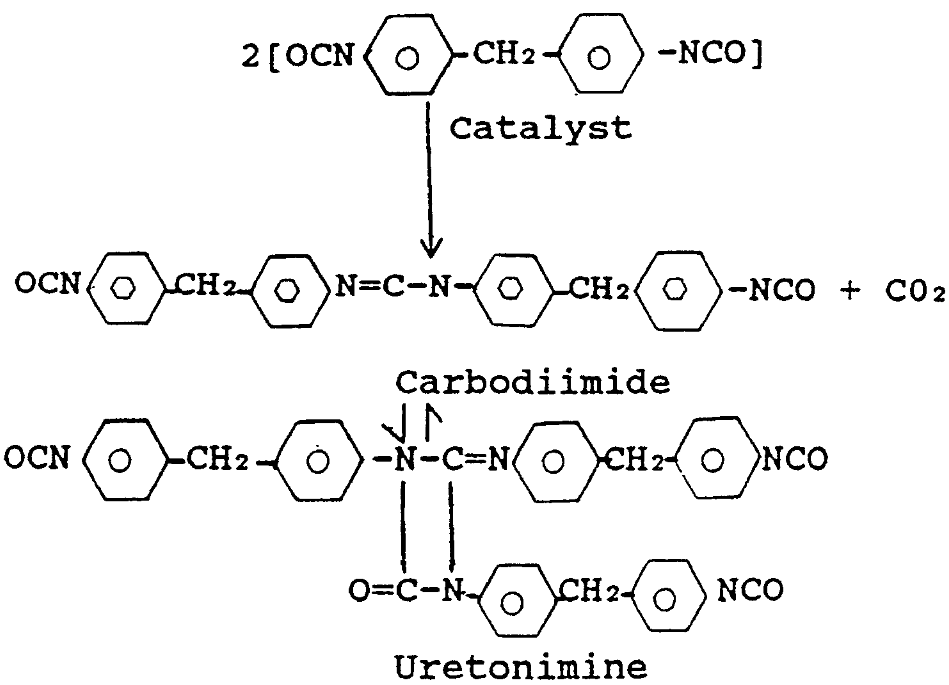


Examples of a commercial material of this type is Dow's ISONATE[R] 143L. Preferably, the isocyanate is used in a stoichiometric amount, based on all the ingredients in the formulation, or an amount greater than the stoichiometric amount.

The polyisocyanate used in accordance with the invention is in the form of a quasi-prepolymer. The quasi-prepolymer is made by reacting an excess of the polyisocyanate with polycarbonate polyols and polyether polyols.

The polyether polyols useful in preparing the quasi-prepolymers used in this invention are alkylene

oxide adducts of a polyhydric alcohol with a functionality of 2 to 4. The alkylene oxide may suitably be ethylene oxide, propylene oxide, or 1,2-butylene oxide, or a mixture of some or all of these. Useful polyols preferably have a molecular weight range from 2,000 to 7,000, although this range is not critical.

Various polycarbonate polyols are useful in this invention. Those skilled in the art will appreciate that many polycarbonate molecules containing two or more hydroxyl groups would be useful in this invention. For example, US-A-4468483 describes an aromatic polyester polycarbonate of the structure:

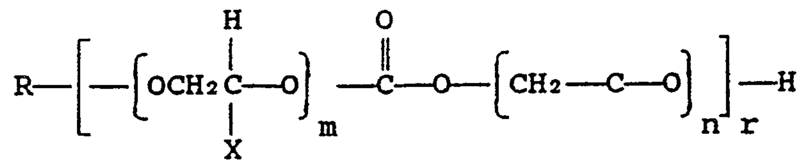

where m and n are independently 1 to 5, r is 1 to 5, X is hydrogen, methyl or ethyl and R is the residue of an aromatic polyester polyol.

Also, US-A-4267120 and -4435527 concern polyester polycarbonates of the following structure:

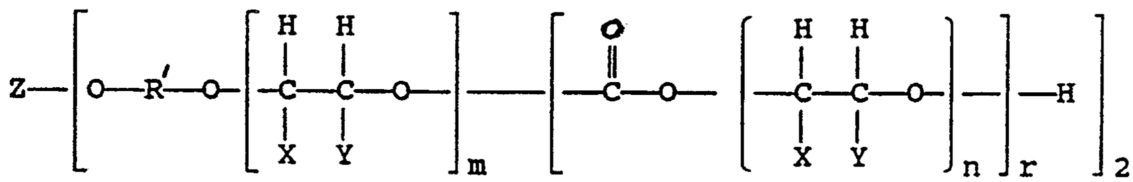

wherein X and Y are independently, hydrogen, methyl, or ethyl, m and n independently are 1 to 5, R' is a nucleus of a glycol selected from lower alkylene glycols and polyalkylene glycols of up to 600 molecular weight, Z is an organic radical from a cyclic organic acid anhydride having 4 to 20 carbon atoms and r is 1 to 5.

The above polycarbonate polyols and other variations aknown to those skilled in the art are useful in this invention. Preferred polycarbonate polyols have the formula:

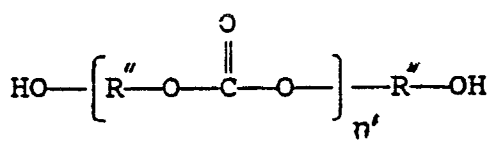

wherein R" is an alkylene , arylene , and/or alkarylene group, and n' is a number such that the product has a hydroxyl number from 30 to 200. Especially preferred polycarbonates are those prepared from aliphatic carbonates.

Catalysts are optional, but not usually necessary for the preparation of the RIM material according to this invention. In a preferred embodiment of this invention, no added catalysts are employed.

Other conventional formulation ingredients may be employed as needed, for example, foam stabilizers, also known as emulsifiers e.g. silicone oils. The foam stabilizers may be an organic silane or siloxane. For example, compounds may be used having the formula:
wherein R is alkyl having 1 to 4 carbon atoms; n is 4 to 8; m is 20 to 40; and the oxyalkylene groups are derived from propylene oxide and ethylene oxide, (see, for example, US-A-3194773).

Reinforcing materials, which may be used, if desired, in the practice of the present invention are known to those skilled in the art. For example, chopped or milled glass fibres chopped or milled carbon fibres and/or other mineral fibres are useful.

Post curing of the elastomer of the invention is optional. Post curing will improve some properties, such as heat sag. Employment of post curing depends on the desired properties of the end product.

The Examples which follow exemplify this invention. The terms and materials used are explained in the following Glossary.

| GLOSSARY OF TERMS AND MATERIALS | |
|---|---|
| DURACARB® 120 - | Polycarbonate diol having a hydroxyl number of 121-135. (Sold by PPG Industries.) |
| DURACARB®124 - | Polycarbonate diol having a hydroxyl number of 50 to 62. (Sold by PPG Industries.) |
| ISONATE® 143L | Carbodiimide-modified liquid MDI, a product of Dow Chemical. |
| JEFFAMINE® D-2000 | Polypropylene oxide diamine of about 2,000 molecular weight. |
| JEFFAMINE® T-3000 | Polypropylene oxide triamine of about 3,000 molecular weight. |
| DETDA | Diethyltoluene diamine. |

EXAMPLES

Preparation of the quasi-prepolymer:

1. Quasi-prepolymer 1:

DURACARB(R) 120 (3,54Kg), which had been heated to make the material fluid, and PPG-2000 (3.54Kg) were placed in an open-top 20 litre vessel. Isonate 143L (10.62kg) was then added with stirring. After a few minutes, this material was poured into a nitrogen-purged vessel and rolled for three hours. After standing for several days, analysis of this material showed 3.44 meq/g of isocyanate in the product.

2. Quasi-prepolymer 2:

DURACARB(R) 124 (3,45Kg), which had been heated to make the material fluid, and PPG-2000 (3,45Kg) were placed in an open-top 20 litre vessel. Isonate 143L (10.35Kg) was then added with stirring. After a few minutes, this material was poured into a nitrogen-purged vessel and rolled for three hours. After standing for several days, analysis of this material showed 3.81 meq/g of isocyanate in the product.

3. Standard Quasi-prepolymer without Polycabonate:

The general preparation of the standard prepolymer is as follows:

PPG-2000 (90.8Kg) was added to a vessel containing Isonate 143L (136.2Kg). The contents of the vessel were rolled for several hours. After standing for several days, analysis of this material showed 3.72 meq/g of isocyanate in the product.

Preparation of Polyurea RIM Elastomers:

4. DETDA (11. 35 Kg), JEFFAMINE(R) T-3000 (6.47Kg), JEFFAMINE D-2000 (6,47Kg), and zinc stearate (0.68Kg) were charged into the B-component working tank of the Accuratio RIM machine. The contents of the tank were heated to 88° C and held there, for thirty minutes, to dissolve the zinc stearate. The contents of this tank were cooled to 45° C. The A-tank on the RIM machine was charged with the quasi-prepolymer of Example 1 and heated to 55° C. The components were pressurized up to 15.86MPa on the A side and 14.48MPa on the B side and injected into a flat plaque mould (457.2x457.2x3.2mm) which had been preheated to 85° C. The part was removed from the mould in 30 seconds. The resulting elastomer was post-cured at 155° C for thirty minutes. Physical properties of the elastomer are listed in Table 1.

5. DETDA (11.50Kg), JEFFAMINE T-3000 (6.40Kg), JEFFAMINE D-2000 (6.40Kg), and zinc stearate (0.67Kg) were charged into the B-component working tank of the Accuratio RIM machine. The contents of the tank were heated to 88° C and held there, for thirty minutes, to dissolve the zinc stearate. The contents of this tank were cooled to 48° C. The A-tank on the RIM machine was charged with the quasi-prepolymer of Example 2 and heated to 54° C. The components were pressurized up to 13.79MPa psi on the A side and 14.48MPa on the B side and injected into the flat plaque mould of Example 4 which had been preheated to 83° C. The part was removed from the mould in 30 seconds. The resulting

elastomer was post-cured at 155° C for thirty minutes.
Physical properties of the elastomer are listed in Table 1.
6. ( Prior art example)
DETDA (11.50Kg), JEFFAMINE T-3000 (6.41Kg) JEFFAMINE D-2000 (6.41Kg), and zinc stearate (0.65Kg) were charged into the B-component working tank of the Accuratio RIM machine. The contents of the tank were heated to 88° C and held there, for thirty minutes, to dissolve the zinc stearate. The contents of this tank were cooled to 50° C. The A-tank on the RIM machine was charged with the standard quasi-prepolymer and heated to 44° C. The components were pressurized up to 13.79MPa on the A side and 13.79MPa on the B side and injected into the flat plague mould of Example 4 which had been preheated to 83° C. The part was post-cured at 155° C for thirty minutes. Physical properties of the elastomer are listed in Table 1.

TABLE 1

| Formulation * | Example 4 | Example 5 | Example 6 |
|---|---|---|---|
| DETDA | 52.65 | 53.90 | 49.39 |
| JEFFAMINE T-3000 | 30.0 | 30.0 | 27.5 |
| JEFFAMINE D-3000 | 30.0 | 30.0 | 27.5 |
| ZINC STEARATE | 3.16 | 3.16 | 2.80 |
| ISONATE 143L | 119.25 | 113.04 | 103.19 |
| DURACARB 120 | 39.75 | | |
| DURACARB 124 | | 37.68 | |
| PPG-2000 | 39.75 | 37.68 | 68.0 |
| **Physical Properties:** | | | |
| SHORE D | 78/75 | 78/76 | 74/70 |
| TENSILE, psi | 4870 | 5225 | 4890 |
| ULT. elong. | 100 | 100 | 130 |
| Flexural modulus | | | |
| 77°F | 109000 | 111000 | 98000 |
| 58°F | 66000 | 77000 | 66000 |
| -20°F | 266000 | 265000 | 21600 |
| 311°F | 38000 | 47000 | 50000 |
| HEAT SAG | | | |
| 250°F | 5.5 | 3.0 | |
| 311°F | 10 | 10 | 9 |
| IZOD IMPACT | 26 | 29 | 28 |

* Parts by weight

## Claims

1. A method for making a reaction injection moulded polyurea elastomer by reacting, in a closed mould,a polyisocyanate, an amine-terminated polyether having an average molecular weight of more than 1500, and having more than 50% of its active hydrogens in the form of amine hydrogens, and an amine-terminated chain extender, characterized in that the polyisocyanate is an isocyanate-terminated quasi-prepolymer which is the reaction product of an excess of an aromatic polyisocyanate with a polycarbonate polyol and a polyether polyol.

2. A method according to Claim 1 characterized in that the amine-terminated polyether has an average

molecular weight of at least 2,500 and a functionality from 2 to 6.

3. A method according to Claim 1 or 2 characterized in that the aromatic polyisocyanate used in the formation of the isocyanate-terminated quasi-prepolymer is a methylene-bridged polyphenyl polyisocyanate.

4. A method according to Claim 3 characterized in that the methylene-bridged polyphenyl polyisocyanate is a mixture containing 20 to 100 weight percent of methylene diphenyl diisocyanate isomers of which 20 to 95 weight percent thereof is the 4,4'-isomer, the remainder being polymethylene polyphenyl polyisocyanates of higher molecular weight and an average functionality of from 2.1 to 3.5.

5. A method according to any one of Claims 1 to 4 characterized in that the polyether polyol used to form the isocyanate-terminated quasi-prepolymer is an alkylene oxide adduct having a molecular weight from 2000 to 4000 derived from a polyhydric alcohol having a functionality of 2 to 4.

6. A method according to any one of Claims 1 to 5 characterized in that the polycarbonate polyol used to form the isocyanate-terminated quasi-prepolymer has the formula:

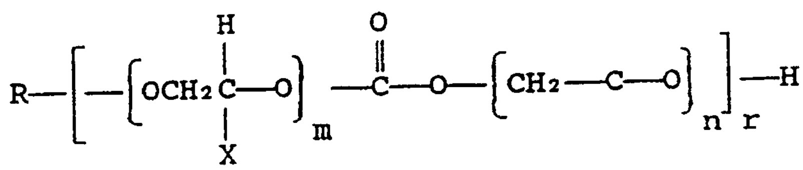

wherein m and n are independently 1 to 5, r is 1 to 5, X is hydrogen, methyl or ethyl, and R is the residue of an aromatic polyester polyol.

7. A method according to any one of Claims 1 to 5 characterized in that the polycarbonate polyol used to form the isocyanate-terminated quasi-prepolymer has the formula:

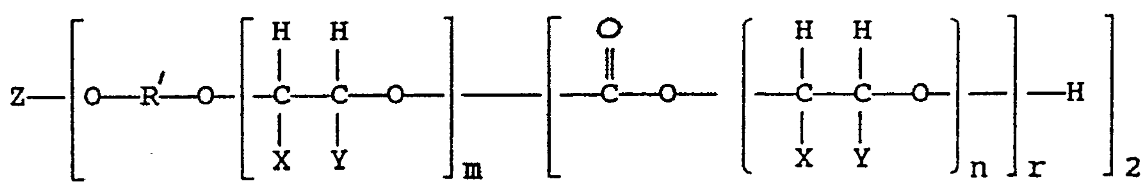

wherein X and Y are independently hydrogen, methyl, or ethyl, m and n independently are 1 to 5, R' is a nucleus of a glycol selected from lower alkylene glycols and polyalkylene glycols of up to 600 molecular weight, Z is an organic radical from a cyclic organic acid anhydride having 4 to 20 carbon atoms and r is 1 to 5.

8. A method according to any one of Claims 1 to 5 characterized in that the polycarbonate polyol used to form the isocyanate-terminated quasi-prepolymer has the formula:

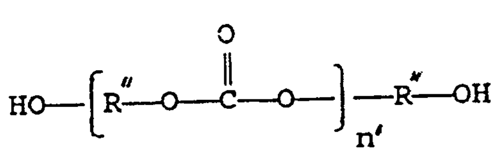

wherein R" is an alkylene, arylene, and/or alkarylene group, and n' is a number such that the product has a hydroxyl number from 30 to 200.

9. A reaction injection moulded polyurea elastomer made by reacting, in a closed mould, a polyisocyanate, an amine-terminated polyether having an average molecular weight of more than 1500, and having more than 50% of its active hydrogen in the form of amine hydrogen, and an amine-terminated chain extender, characterized in that the polyisocyanate is an isocyanate-terminated quasi-prepolymer which is the reaction product of an excess of an aromatic polyisocyanate with a polycarbonate polyol and a polyether polyol.